# EUROPÄISCHE PATENTSCHRIFT

(11) **EP 0 462 154 B1**
(45) Veröffentlichungstag und Bekanntmachung des Hinweises auf die Patenterteilung: **18.11.1993**
(21) Anmeldenummer: 90904288.9
(22) Anmeldetag: 06.03.1990
(51) Int. Cl.: B60H 1/22

(54) **FAHRZEUGHEIZUNG**
VEHICLE HEATING
CHAUFFAGE DE VEHICULE

(30) Priorität: 07.03.1989 DE 3907222; 29.12.1989 DE 3943335
(43) Veröffentlichungstag der Anmeldung: 27.12.1991
(73) Patentinhaber: Firma J. Eberspächer, 73730 Esslingen (DE)
(72) Erfinder: QUAAS, Hans-Reiner, D-8038 Gröbenzell (DE); KEINERT, Helmut, D-7440 Nürtingen (DE)
(74) Vertreter: Klunker . Schmitt-Nilson . Hirsch
(86) Internationale Anmeldenummer: EP9000366
(87) Internationale Veröffentlichungsnummer: WO9010552

(56) Entgegenhaltungen:
- DE-A- 2 327 830
- DE-A- 3 010 078
- US-A- 3 758 031
- US-A- 4 700 888

## Beschreibung

Die Erfindung bezieht sich auf eine Fahrzeugheizung, aufweisend
(a) ein durch Verbrennung von Flüssigbrennstoff arbeitendes Heizgerät mit einem Verbrennungsgas/Flüssigkeit-Wärmetauscher;
(b) und einen Flüssigkeit/Luft-Wärmetauscher zur Lieferung erwärmter Fahrzeugbeheizungsluft, der mit dem Verbrennungsgas/Flüssigkeit-Wärmetauscher in Flüssigkeitsströmungsverbindung steht.

Eine derartige Fahrzeugheizung ist zum Beispiel aus den Dokumenten US-A-4 700 888 und US-A-3 758 031 bekannt. Hierbei ist das Heizgerät an von dem Flüssigkeit/Luft-Wärmetauscher entfernter Stelle vorgesehen und mit diesem über lange Flüssigkeitsleitungen verbunden.

Ferner ist aus dem Dokument DE-A-37 18 611 eine Fahrzeugheizung bekannt, die einen an den Motorkühlmittelkreislauf angeschlossenen Flüssigkeit/Luft-Wärmetauscher und ein Heizgerät mit einem Verbrennungsgas/Luft-Wärmetauscher aufweist, wobei die beiden Wärmetauscher getrennt hintereinan der in einem Kanal für Fahrzeugbeheizungsluft angeordnet sind.

Die erfindungsgemäße Fahrzeugheizung ist dadurch gekennzeichnet, daß der Flüssigkeit/Luft-Wärmetauscher und das Heizgerät eine kombinierte Heizeinheit bilden, bei welcher der Flüssigkeit/Luft-Wärmetauscher und mindestens der den Verbrennungsgas/ Flüssigkeit-Wärmetauscher beinhaltende Teil des Heizgeräts zusammengefaßt sind.

Die erfindungsgemäße Fahrzeugheizung zeichnet sich also durch eine räumlich kompakt zusammengefaßte Heizeinheit aus dem Flüssigkeit/Luft-Wärmetauscher und dem Heizgerät aus, was den Einbau erleichtert und rationalisiert und was vor allem Wärmeverluste vermeidet, die bei dem bisher üblichen, räumlich getrennten Vorsehen des Heizgeräts von dem Flüssigkeit/Luft-Wärmetauscher entstanden. Der Wärmetransport mittels der Flüssigkeit zu dem Flüssigkeit/Luft-Wärmetauscher geschieht unter Vermeidung langer Strömungswege außerhalb der Heizeinheit und Vermeidung damit zusammenhängender Wärmeverluste an die Umgebung.

Vorzugsweise weist die Heizeinheit einen Verbrennungsgas/Flüssigkeit-Wärmetauscher mit einem Flüssigkeitsdurchströmungs-Ringraum auf, der mit strömungsumlenkenden Mitteln zum Erzeugen einer im wesentlichen schraubenlinienförmigen Flüssigkeitsströmung in dem Ringraum versehen ist. Dies optimiert die Wärmeübertragungsverhältnisse in dem Heizgerät.

Vorzugsweise weist die Heizeinheit bzw. das Heizgerät eine, insbesondere integrierte, Flüssigkeitsumwälzpumpe zum Erzeugen von Flüssigkeitsströmung durch den Verbrennungsgas/Flüssigkeit-Wärmetauscher und den Flüssigkeit/Luft-Wärmetauscher auf. Auch dies dient der Vermeidung längerer Strömungswege für die Wärmeträger flüssigkeit.

Das Heizgerät ist vorzugsweise ein Heizgerät mit integriertem Brenner und integriertem Verbrennungsluftgebläse. Weiter unten werden jedoch ebenfalls günstige, alternative Möglickeiten für ein Separieren des Brenner kopfs des Heizgeräts und/oder der Verbrennungsluftversorgung des Heizgeräts angegeben.

Die erfindungsgemäße Fahrzeugheizung läßt sich für Fahrzeuge praktisch beliebiger Art einsetzen, ganz besonders jedoch bei Fahrzeugen mit einem Antriebs-Verbrennungsmotor. Als Beispiele für Fahrzeuge, bei denen die erfindungsgemäße Fahrzeugheizung einsetzbar ist, seien genannt: Personenkraftwagen, Omnibusse, Lastkraftwagen (zur Beheizung der Fahrerkabine und/oder des Laderaums), Wohnwagen, Wohnmobile, Baufahrzeuge, Bagger, Fahrzeugkräne, Segeljachten etc.

Wenn es sich bei dem Fahrzeug, bei dem die erfindungsgemäße Fahrzeugheizung eingebaut ist, um ein Fahrzeug mit Antriebs-Verbrennungsmotor handelt, ist die Heizeinheit vorzugsweise an den Kühlflüssigkeitskreislauf des Fahrzeugs angeschlossen. Die Heizeinheit kann als sogenannte Standheizung arbeiten, die bei nichtlaufendem Antriebs-Verbrennungsmotor Wärme zur Beheizung des Fahrzeuginnenraums und/oder zur Vorwärmung des Verbrennungsmotors vor dessen Starten liefert. Die Heizeinheit kann aber auch als Ergänzungsheizung eingesetzt werden, die zusätzliche Wärme in derartigen Betriebszuständen liefert, in denen der Antriebs-Verbrennungsmotor nicht genügend Wärme zur Beheizung des Fahrzeuginnenraums bereitstellt. Die Heizeinheit kann schließlich als einzige Beheizungsquelle vorgesehen sein, insbesondere bei Fahrzeugen ohne Antriebs-Verbrennungsmotor oder bei Fahrzeugen, deren Antriebs-Verbrennungsmotor überhaupt nicht zur Lieferung von Beheizungswärme herangezogen ist.

Nach einer besonders bevorzugten Ausgestaltung der Erfindung weist der Kühlflüssigkeitskreislauf eine Bypassleitung zur kurzen Verbindung des Flüssigkeitsauslasses des Flüssigkeits/Luft-Wärmetauschers mit dem Flüssigkeitseinlaß des Heizgeräts und ein Steuerventil zum Steuern des Verhältnisses der Flüssigkeitsströmung durch die Bypassleitung und durch den Verbrennungsmotor auf. Mittels des Steuerventils läßt sich steuern, zu welchen Anteilen die Wärmeträgerflüssigkeit direkt zurück zu dem Heizgerät und zu dem Verbrennungsmotor strömt. Eine bevorzugte Betriebsweise ist diejenige, bei der eine gewisse Zeit vor dem beabsichtigten Einsteigen in das Fahrzeug die Heizeinheit eingeschaltet und der gesamte Wärmeträgerflüssigkeitsstrom von dem Flüssigkeit/Luft-Wärmetauscher unmittelbar wieder dem Heizgerät zugeleitet wird. Nach einiger Zeit wird ein Anteil dieses Wärmeträgerflüssigkeitsstroms vor dem Zurückleiten zu dem Heizgerät dem Antriebsverbrennungsmotor zugeleitet, um diesen vor dem beabsichtigten Starten vorzuwärmen. Dieser Anteil kann gleich oder nach einiger Zeit auf 100 % gesteigert sein. Der Übergang in die letztgenannte Betriebsphase, der auch mit einem allmählichen Ansteigen des Anteils des Wärmeträgerflüssigkeitsstroms zu dem Verbrennungsmotor erfolgen kann, kann vorzugsweise durch eine geeignete Zeitschaltuhr oder aufgrund der Temperatur, die die Wärmeträgerflüssigkeit erreicht hat, gesteuert sein. Zur Steuerung aufgrund der Temperatur der Wärmeträgerflüssigkeit kann diese Temperatur insbesondere am Übergang von dem Heizgerät in den Flüssigkeit/Luft-Wärmetauscher oder am Austritt des Flüssigkeit/Luft-Wärmetauschers oder am Eintritt des Heizgeräts erfaßt werden. Ein begeeignetes Mittel ist ein Thermostatventil als Steuerventil.

In Weiterbildung der Erfindung weist der Flüssigkeit/Luft-Wärmetauscher zwei in Luftdurchströmungs richtung hintereinander angeordnete Rohrreihen auf, wobei die Rohre der vorderen Rohrreihe an einer ersten Seite des Wärmetauschers mit den Rohren der hinteren Rohrreihe verbunden sind, und ist das Heizgerät an der gegenüberliegenden zweiten Seite des Wärmetauschers angebaut. Die dem Heizgerät gegenüberliegende, erste Seite des Flüssigkeit/Luft-Wärmetauschers ist demzufolge reine Flüssigkeitsströmungsumlenkseite, so daß die Wärmeträgerflüssigkeit auf denkbar kürzestem Weg zirkuliert. Außerdem können die Anschlüsse an den Kühlflüssigkeitskreislauf des Antriebs-Verbrennungsmotors problemlos an der Heizgerätseite der Heizeinheit vorgesehen werden.

Eine bevorzugte, konstruktiv besonders einfache Gestaltung der Zusammenbauverbindung zwischen dem Flüssigkeit/Luft-Wärmetauscher und dem Heizgerät sieht so aus, daß das Heizgerät einen Flansch aufweist und daß ein dem Heizgerät benachbarter Rohrboden des Flüssigkeit/Luft-Wärmetauschers um den Flansch gebördelt ist.

Nach eine besonders bevorzugten Ausgestaltung der Erfindung weist die Heizeinheit eine Baugröße auf, die im wesentlichen der Baugröße der bei bisherigen Kraftfahrzeugen vorhandenen Flüssigkeit/Luft-Wärmetauscher zur Fahrzeuginnenraumbeheizung entspricht oder nur wenig größer ist. Infolgedessen kann man, wie bevorzugt, die Heizeinheit an derjenigen Stelle des Fahrzeugs einbauen, wo herkömmlicherweise der Flüssigkeit/Luft-Wärmetauscher der Fahrzeugheizung sitzt.

Vorzugweise ist zur Brennstoffversorgung der Heizeinheit ein Zwischentank vorgesehen, der bei Betrieb des Verbrennungsmotors durch dessen Kraftstoffpumpe füllbar ist. Dieser Zwischentank kann höher angeordnet sein als die Heizeinheit. Infolgedessen kann man mit Schwerkraftförderung des Brennstoffs aus dem Zwischentank zu der Heizeinheit, beispielsweise gesteuert durch ein Magnetventil, arbeiten und eine eigene Brennstofförderpumpe für die Heizeinheit einsparen. Der Zwischentank, der eine Größe von beispielsweise 1°bis 5 l haben kann, wird während des Betriebs des Verbrennungsmotors mit Brennstoff gefüllt, vorzugsweise mittels des bei Verbrennungsmotoren mit Einspritzanlage meistens sowieso vorhandenen Rücklaufs von dem Verbrennungsmotor zu dem Kraftfahrzeugtank.

Es wird darauf hingewiesen, daß die beschriebene Zwischentank-Brennstoffversorgung auch bei Fahrzeugheizgeräten einsetzbar ist, die nicht mit dem Flüssigkeits/Luft-Wärmetauscher zu einer Heizeinheit kombiniert sind.

Die erfindungsgemäße Heizeinheit kann in dem herkömmlicherweise in einem Kraftfahrzeug vorhandenen, der Belüftung, Beheizung und Luftverteilung dienenden Luft- und Verteilerschacht angeordnet sein. Dem Flüssigkeit/Luft-Wärmetauscher kann ein Gebläse zugeordnet sein, vorzugsweise auf dessen Zuströmseite. Das Belüftungs- und Heizsystem kann mit einer Umlufteinrichtung ausgestattet sein, so daß das Gebläse ansaugseitig wahlweise mit der Außenluft oder der Fahrzeuginnenluft in Verbindung steht. In das Belüftungs- und Beheizungssystem kann eine Fahrzeugklimaanlage integriert sein. Oder die erfindungsgemäße Heizeinheit kann in eine Fahrzeugklimaanlage integriert sein.

Durch die Erfindung wird auch ein kraftstoffbetriebenes Wärmetauscherheizsystem für Kraftfahrzeuge geschaffen mit:
- einem Gebläse, dessen Lüfter ansaugseitig wahlweise mit der Außenluft (Frischluft) oder der Fahrzeuginnenluft (Umluft) in Verbindung steht;
- einem, vom Kühlkreislauf des Motors gespeisten Wärmetauscher, welcher innerhalb eines Luft- und Verteilerschachtes auf der Abluftseite des Lüfters angeordnet ist;
- einem Luftführungs- und Verteilersystem, welches unmittelbar von dem Gebläse mit Frischluft oder mittelbar vom Gebläse unter Zwischenschaltung des Wärmetauschers mit Warmluft gespeist wird und welches in den Innenraum des Kraftfahrzeugs mündet, dadurch gekennzeichnet, daß anstelle des fahrzeugseitig vorhandenen Wärmetauschers zwischen dem Gebläse und dem Lüftungsführungs- und Verteilersystem ein, in den Wärmetauscher integriertes, kraftstoffbetriebenes Heizgerät vorgesehen ist, welches eine Brennkammer aufweist, wobei die durch Verbrennung eines Kraftstoff-Luftgemisches in der Brennkammer erzeugte Wärme auf das Wasser des Kühlkreislaufs des Motors übertragen wird, welches durch den Wärmetauscher zirkuliert, der unmittelbar von dem durch das Gebläse erzeugten Luftstrom umströmt wird. Die Luft erwärmt sich dabei und wird in das Fahrzeuginnere transportiert.

Üblicherweise ist der Fahrzeuginnenraum eines Kraft fahrzeugs von dem Motorraum des Kraftfahrzeugs durch eine Blechwand, die sogenannte Spritzwand, getrennt. Es ist möglich, den Brennerkopf der Heizeinheit und/oder das Verbrennungsluftgebläse der Heizeinheit räumlich geringfügig separiert von der eigentlichen Heizeinheit auf der dem Fahrzeuginnenraum abgewandten Seite der Spritzwand anzuordnen.

Die Erfindung und Ausgestaltungen der Erfindung werden im folgenden anhand von zeichnerisch dargestellten Ausführungsbeispielen noch näher erläutert. Es zeigt:
- Fig. 1: eine Heizeinheit im Vertikalschnitt;
- Fig. 2: die Heizeinheit von Fig. 1 im Horizontalschnitt;
- Fig. 3: die Einbindung der Heizeinheit von Fig. 1 und 2 in den Kühlflüssigkeitskreislauf eines Antriebs-Verbrennungsmotors eines Kraftfahrzeugs.
- Fig. 4: eine zweite Ausführungsform eines Heizeinheit im Schnitt längs der Brennkammerachse;
- Fig. 5: die Heizeinheit von Fig. 4 im Querschnitt;
- Fig. 6: die räumliche Anordnung der Heizeinheit von Fig. 4 und 5 in einem Kraftfahrzeug.

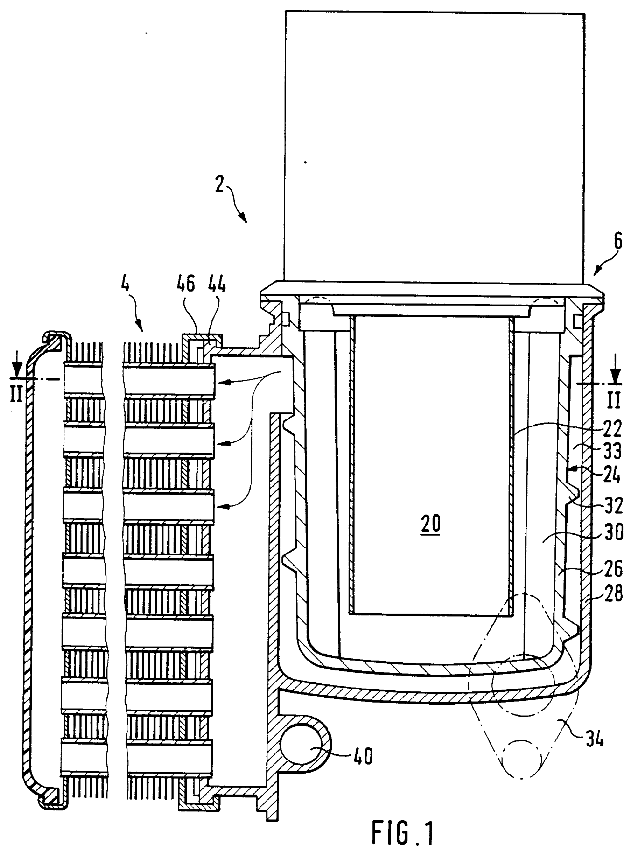

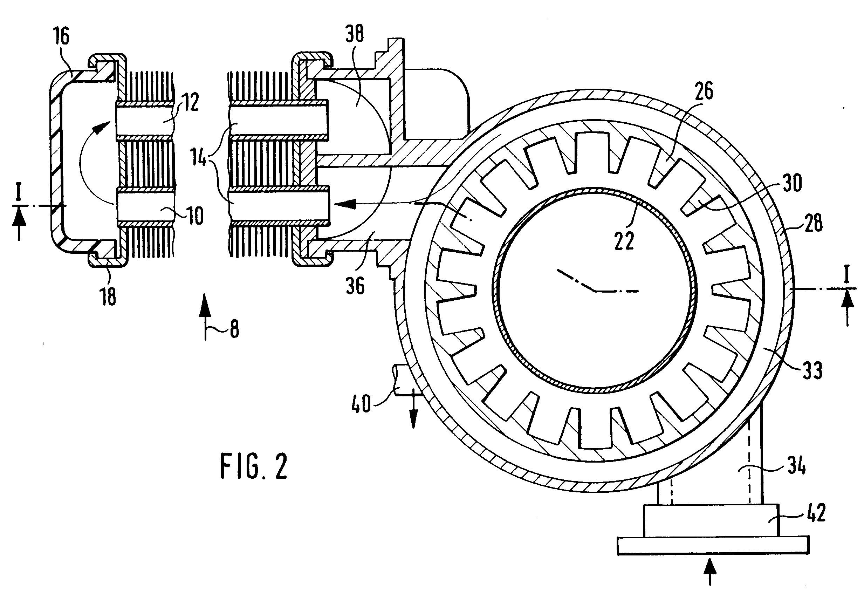

Die in Fig. 1 und 2 gezeichnete Heizeinheit 2 besteht aus einem Flüssigkeit/ Luft-Wärmetauscher 4 und einem unmittelbar damit zusammengebauten Heizgerät 6, das durch Verbrennen von Benzin oder Dieselöl Wärme erzeugt. Der Wärmetauscher 4 wird entsprechend dem Pfeil 8 von Luft durchströmt, und die im Wärmetauscher 4 erwärmte Luft wird in den Innenraum des zu beheizenden Personenkraftwagens abgegeben. Die Luftdurchströmung des Wärmetauschers 4 erfolgt infolge des beim Fahren des Kraftfahrzeugs an entsprechenden Lufteintrittsstellen entstehenden Staudrucks und/oder durch ein dem Wärmetauscher 4 zugeordnetes Gebläse. Es kann vorgesehen sein, daß das Heizungssystem des Kraftfahrzeugs eine sog. Umluftstellung hat, so daß bei dieser Stellung die Luft dem Wärmetauscher 4 nicht von außen sondern aus dem Inneren des Kraftfahrzeugs angesaugt zuströmt.

Der Wärmetauscher 4 weist in Luftdurchströmungsrichtung 8 hintereinander eine vordere Rohrreihe 10 und eine hintere Rohrreihe 12 auf, wobei in jeder Rohrreihe 10, 12 mehrere waagrechte Rohre 14 übereinander vorhanden sind. Alle Rohre 14 sind durch dünne Blechrippen miteinander verbunden. Die Rohre 14 der vorderen Rohrreihe 10 werden - in der Blickrichtung der Figuren 1 und 2 - von rechts nach links mit Flüssigkeit durchströmt, während die Rohre 14 der hinteren Rohr reihe 12 von links nach rechts durchströmt werden. An seiner in Figuren 1 und 2 linken, ersten Seite weist der Wärmetauscher 4 einen sich über die Höhe des Wärmetauschers 4 erstreckenden Wasserkasten 16 auf. Der Wasserkasten 16 ist durch ein langgestrecktschalenartiges Kunststoffteil gebildet, das durch einen umgebördelten Rand eines benachbarten Rohrbodens 18 an dem Wärmetauscher 4 befestigt ist. Über das Innere des Wasserkastens 16 stehen die Rohre der vorderen Rohrreihe 10 mit den Rohren der hinteren Rohrreihe 12 in Strömungsverbindung.

Von dem Heizgerät 6 sind detailliert nur der untere Endbereich einer Brennkammer 20, die von einem unten offenen Rohr 22 umgeben ist, ein Verbrennungsgas/Flüssigkeit-Wärmetauscher 24 und diverse, weiter unten zu beschreibende Flüssigkeitspassagen gezeichnet. Der obere Bereich des Heizgeräts 6 ist nur schematisch angedeutet. Hier befinden sich im wesentlichen ein Verbrennungsluftgebläse, der obere Bereich der Brennkammer 20, eine Einrichtung zum feinverteilten Einbringen von flüssigem Brennstoff in die Brennkammer und eine Zündeinrichtung. Das Heizgerät 6 wird beispielsweise mittels einer integrierten oder beabstandet eingebauten Pumpe mit Brennstoff versorgt. Bis auf die Gestaltung des Übergangs zu dem Flüssigkeit/Luft-Wärmertauscher 4 ist das Heizgerät 6 ein bekanntes Heizgerät, wie es zum Beispiel bei bislang bereits vertriebenen Kraftfahrzeug-Standheizgeräten eingesetzt wird.

Der Verbrennungsgas/Flüssigkeit-Wärmetauscher 24 besteht im wesentlichen aus einem Metallteil 26, das die Gestalt eines in Vertikalrichtung langgestreckten, unten geschlossenen, von unten über das Rohr 22 gestülpten Topfes hat, und einem darüber gestülpten Außenmantel 28 mit ähnlicher, lediglich etwas größerer Gestalt. Innenseitig weist das Metallteil vertikal verlaufende Rippen 30 auf, die über den Umfang des Metallteils 26 verteilt sind. Außenseitig weist das Metallteil 26 eine schraubenlinienförmig verlaufende Rippe 32 auf, an der der Außenmantel 28 mit seiner im wesentlichen zylindrischen Innenfläche außen anliegt.

Im unteren Bereich des Heizgeräts 6 befindet sich ein Flüssigkeitszuführungsstutzen 34, der in den Flüssigkeitsraum zwischen dem Metallteil 26 und dem Außenmantel 28 mündet. Von diesem Flüssigkeitsraum führt im oberen Bereich des Wärmetauschers 24 eine Flüssigkeitsüberführungspassage 36 weg. Aufgrund der Strömungsleitrippe 32 herrscht in dem im wesentlichen zylindrischen Ringraum zwischen dem Metallteil 26 und dem Außenmantel 28 eine im wesentlichen schraubenlinienförmige Flüssigkeitsströmung von unten nach oben.

Die Flüssigkeitsüberführungspassage 36 biegt neben dem Wärmertauscher 24 in einen vertikalen Verlauf um und ist in Vertikalrichtung so lang wie die erste Rohrreihe 10 hoch ist. Die Rohre 14 der ersten Rohrreihe 10 sind an ihrem rechten Ende zu der Flüssigkeitsüberführungspassage 36 offen.

Das Heizgerät 6 weist ferner eine Flüssigkeitsabführungspassage 38 auf, die sich vertikal-parallel zu der Flüssigkeitsüberführungspassage 36 erstreckt und zu deren Innnenraum hin die rechten Enden der Rohre 14 der hinteren Rohrreihe 12 offen sind. Die Flüssigkeitsabführungspassage 38 ist oben geschlossen und geht unten in einen Flüssigkeitsabführungsstutzen 40 über. An dem Flüssigkeitszuführungsstutzen 34 ist eine schematisch eingezeichnete, elektrisch angetriebene Umwälzpumpe 42 vorgesehen.

Die Wände der Flüssigkeitsüberführungspassage 36 und der Flüssigkeitsabführungspassage 38 weisen an ihrer dem Flüssigkeit/Luft-Wärmetauscher 4 zugewandten Seite einen Flansch 44 auf, der insgesamt gesehen im wesentlichen abgerundet-rechteckig ist. Ein rechter Rohrboden 46 des Wärmetauschers 4 ist mit seinem Rand um diesen Flansch 44 gebördelt, wodurch das Heizgerät 6 und der Wärmetauscher 4 unmittelbar zu einer Heizeinheit 2 zusammengebaut sind.

Moderne Heizgeräte 6 sind räumlich so kompakt, daß die Heizeinheit 2 nicht entscheidend größer ist als der auch bisher in Kraftfahrzeugen vorgesehene Raum rein für einen Flüssigkeit/Luft-Wärmetauscher. Infolgedessen läßt sich die Heizeinheit 6 in diesem, gegebenenfalls bei neuentwickelten Kraftfahrzeugmodellen etwas vergrößertem Einbauraum unterbringen. Je nach Bestellung des künftigen Kraftfahrzeugbesitzers läßt sich wahlweise ein "normaler" Flüssigkeit/Luft-Wärmetauscher oder eine Heizeinheit 2 aus Heizgerät 6 und Wärmetauscher 4 einbauen.

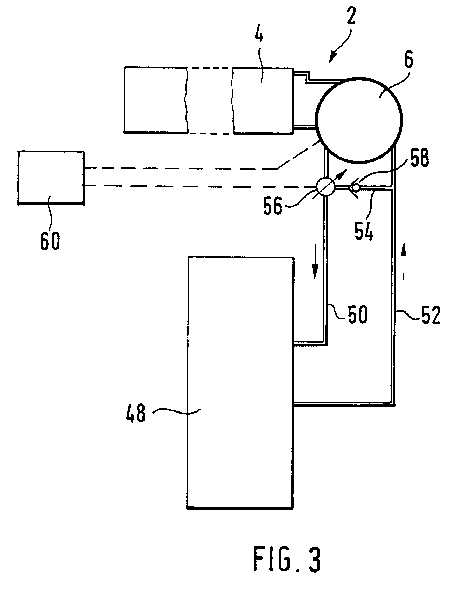

Fig. 3 veranschaulicht im Überblick das gesamte Kraftfahrzeug-Heizsystem mit einbezogenem Antriebs-Verbrennungsmotor 48. Der Flüssigkeitsabführungsstutzen 40 der Heizeinheit 2 ist durch eine Leitung 50 mit dem Verbrennungsmotor verbunden, und der Flüssigkeitszuführungsstutzen 34 der Heizeinheit 2 ist durch eine Leitung 52 mit dem Verbrennungsmotor 48 verbunden. Der Verbrennungsmotor 48 weist eine nicht eingezeichnete Flüssigkeitspumpe auf. Zwischen den Enden der Leitungen 50 und 52 durchströmt die Flüssigkeit den Zylinderblock, den Zylinderkopf und die Flüssigkeitspumpe des Verbrennungsmotors 48.

In Fig. 3 erkennt man ferner eine Bypassleitung 54, die dicht am Heizgerät 6 von dem Flüssigkeitsabführungsstutzen 40 bzw. der Leitung 50 zu dem Flüssigkeitszuführungsstutzen 34 bzw. der Leitung 52 führt. An der erstgenannten Abzweigungsstelle der Bypassleitung 54 sitzt ein Dreiwege-Thermostatventil 56. In der Bypassleitung 54 ist ein Rückschlagventil 58 angeordnet, so daß die Bypassleitung 54 nur in Fig. 3 von links nach rechts durchströmt werden kann.

Wenn das Heizgerät 6 gestartet wird und die Flüssigkeit im gesamten Flüssigkeitssystem noch kalt ist, hat das Thermostatventil 56 eine Stellung, in der der gesamte Flüssigkeitsstrom aus dem Wärmertauscher 4 kommend durch die Bypassleitung 54 auf kürzestem Wege wieder dem Heizgerät 6 zugeführt wird. Infolgedessen wird die im Heizgerät 6 erzeugte Wärme auf die Beheizung des Kraftfahrzeuginnenraums konzentriert. Wenn nach gewisser Betriebszeit die Temperatur der Flüssigkeit in diesem Kurzkreislauf einen bestimmten Schwellwert erreicht hat, beispielsweise etwa 85°C erfaßt am Flüssigkeitsabführungsstutzen 40 bzw. dem Ort des Thermostatventils 56, stellt das Thermostatventil 56 allmählich um derart, daß ein zunehmender Anteil der Flüssigkeit von dem Flüssigkeitsabführungsstutzen 40 nicht in die Bypassleitung 54 sondern in die Leitung 50 strömt. Auf diese Weise wird der Verbrennungsmotor 48 vor seinem Starten vorgewärmt. Dennoch ist sichergestellt, daß die vom Heizgerät 6 aufgeheizte Flüssigkeit zunächst durch den Wärmetauscher 4 strömt und somit ein Teil des Wärmeinhalts der Flüssigkeit weiterhin für die Beheizung des Fahrzeuginnenraums zur Verfügung steht.

Es ist ersichtlich, daß das gezeichnete Fahrzeugheizungssystem auch bei laufendem und damit wärmeerzeugendem Verbrennungsmotor 48 betrieben werden kann. In diesem Fall arbeitet das Heizgerät 6 als Ergänzungsheizgerät. Für diese Betriebsart sollte jedoch sichergestellt sein, daß das Thermostatventil 56 unabhängig von der Temperatur der Flüssigkeit mindestens eine Mindestmenge Flüssigkeit zu der Leitung 50 durchläßt. Das Heizgerät 6 kann dabei auch ganz abgeschaltet sein.

Es wird betont, daß das Thermostatventil 56 nicht unbedingt an der gezeichneten Stelle sitzen muß. Es kann alternativ auch an der Einmündung der Bypassleitung 54 in die Leitung 52 bzw. den Flüssigkeitszuführungsstutzen 34 sitzen. Statt des gezeichneten Dreiwegeventils 56 kann auch ein einfacheres, in offenere oder geschlossenere Stellungen steuerbares Ventil in der Leitung 50 oder der Bypassleitung 54 oder der Leitung 52 vorgesehen sein. Bei all diesen Varianten bleibt die vorstehend beschriebene Funktion analog erhalten.

Es wird ferner darauf hingewiesen, daß statt des Thermostatventils ein mit externer Temperaturerfassung an geeigneter Stelle des Flüssigkeitskreislaufs arbeitendes, temperaturabhängig gesteuertes Ventil vorgesehen sein kann.

Außerdem ist eine Zeitsteuereinheit 60 eingezeichnet, mit der sich insbesondere das Starten des Heizgerats zum Beispiel für eine bestimmte Zeitspanne vor einem beabsichtigten Abfahrtszeitpunkt voreinstellen läßt. Ein Ventil, das an der beschriebenen Stelle des Thermostatventils 56 oder den als Varianten beschriebenen Stellen des Flüssigkeitskreislaufs befindet, ist an die Zeitsteuereinheit 60 angeschlossen. Mittels der Zeitsteuereinheit 60 wird dieses Ventil beispielsweise 10 bis 30 min nach dem Starten des Heizgeräts 6 allmählich umgesteuert, wie weiter oben beschrieben. Diese Zeitsteuerung des Ventils kann mit der vorstehend beschriebenen Temperatursteuerung des Ventils kombiniert sein.

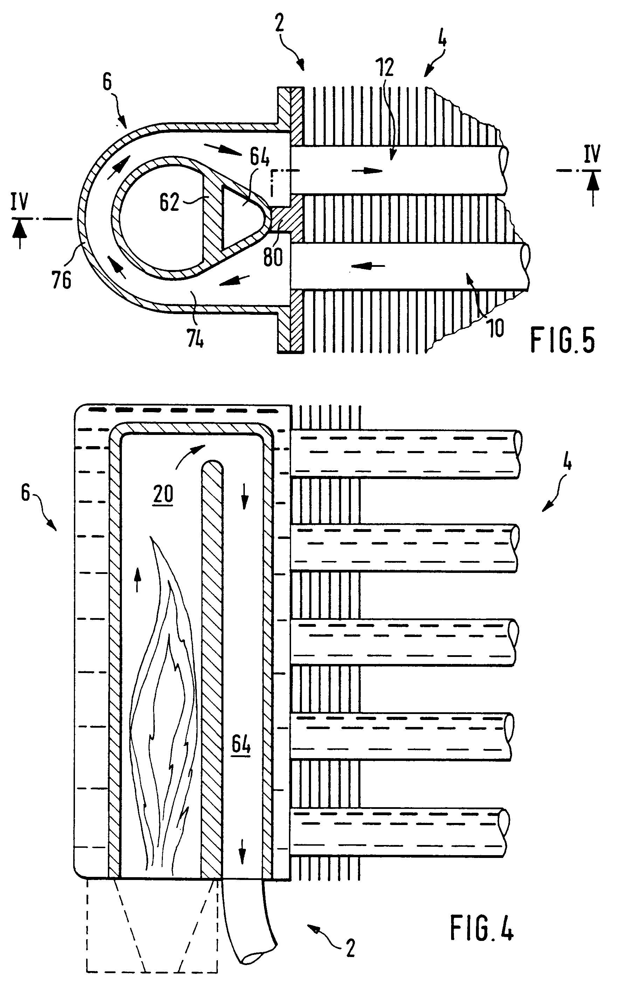

Die in den Fig. 4, 5 und 6 gezeichnete Heizeinheit 2 weist einen Flüssigkeit/Luft-Wärmetauscher 4 und ein Heizgerät 6 auf. Die Brennkammer 20 des Heizgeräts 6 hat im Querschnitt quer zur Längsachse des Heizgeräts 6 die Gestalt eines Kreises mit einer ebenen Trennwand 62 an einer Seite. Jenseits der Trennwand 62 verläuft parallel zur Brennkammer 20 ein Abgaskanal 64 mit im wesentlichen dreieckigen bis trapezförmigem Querschnitt. Durch den Abgaskanal 64 strömen die Abgase im Gegenstrom zur Strömungsrichtung der Verbrennungsgase in der Brennkammer 20. Die Verbrennungsabgase der Heizeinheit 2 verlassen die Heizeinheit 2 durch eine Leitung 64, die durch eine Spritzwand 66 zwischen dem Fahrzeuginnenraum 68 und dem Motorraum 70 des Fahrzeugs nach außen geführt ist.

Der vorderen Rohrreihe 10 des Flüssigkeit/Luft-Wärmetauschers 4 wird Flüssigkeit über eine Leitung 72 vom Motorraum 70 des Kraftfahrzeugs her auf der in den Fig. 4 bis 6 rechten Seite zugeführt. Links münden die Rohre der vorderen Rohrreihe 10 in einen Umströmungsraum 74 des Heizgeräts 6, der zwischen der Wand der Brennkammer 20 bzw. des Abgaskanals 64 und einem im wesentlichen verlängert-halbzylindrischen Mantel 76 des Heizgeräts 6 vorgesehen ist. Nach Durchströmen des Umströmungsraums 74 tritt die Flüssigkeit in die linken Enden der Rohre der hinteren Rohrreihe 12 ein. Am rechten Ende der hinteren Rohrreihe 12 tritt die Flüssigkeit aus dem Wärmetauscher 4 in eine Leitung 78, die durch die Spritzwand 66 in den Motorraum 70 geführt ist. Der Umströmungsraum 74 ist an derjenigen Stelle, wo das Heizgerät 6 an den Wärmetauscher 4 anschließt, durch eine Wand 80 unterteilt, so daß die Flüssigkeit aus der vorderen Rohrreihe 10 den Umströmungsraum 74 unter Richtungsänderung von etwa 180° umströmt und dann in die hintere Rohrreihe 12 eintritt.

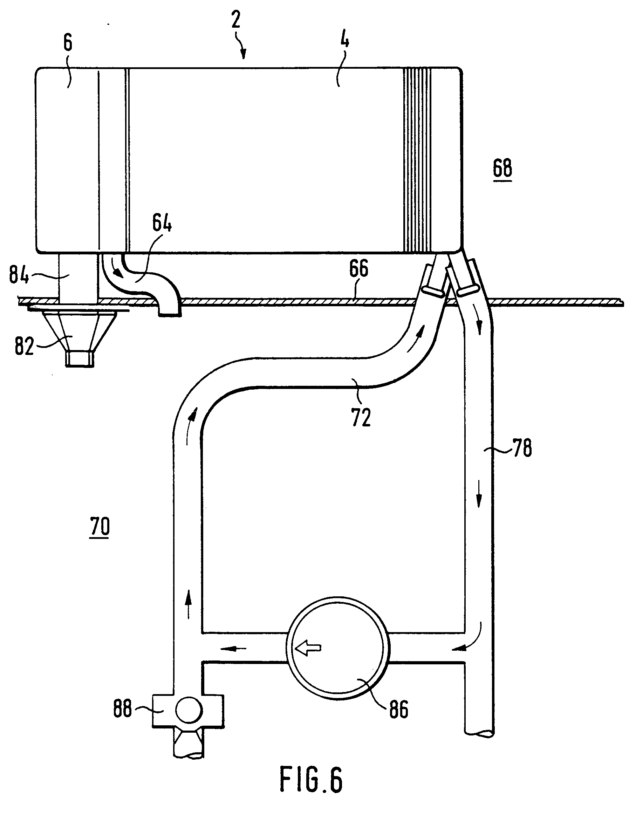

In Fig. 6 erkennt man ferner, daß der Brennerkopf 82 des Heizgeräts 6, welcher die Brennstoffeinbringung in die Verbrennungsluft und die Zündeinrichtung, beispielsweise eine Glühkerze, enthält, auf der Motorraumseite von der Spritzwand 66 angeordnet ist und über ein kurzes Rohr 84 mit der Brennkammer 20 des Heizgeräts verbunden ist. Ein Gebläse zur Lieferung der Verbrennungsluft kann in dem Brennerkopf 82 integriert sein oder ein Stück vor dem Brennerkopf 82 angeordnet sein.

In Fig. 6 ist ferner veranschaulicht, daß die Leitung 78 über eine elektrisch angetriebene Pumpe 86 mit der Leitung 72 verbunden ist. Mittels der Pumpe 86 läßt sich die Flüssigkeit durch das Heizgerät 6 und den Wärmetauscher 4 im Kreislauf umwälzen. Die Leitung 78 sowie die Leitung 72 sind außerdem mit dem Kühlflüssigkeitssystem des Verbrennungsmotors des Kraftfahrzeugs verbunden, wobei in der Leitung 72 zwischen der Einmündung einer von der Pumpe 86 kommenden Leitung und dem Verbrennungsmotor ein Rückschlagventil 88 angeordnet ist, damit die Leitung 72 nur in Richtung von dem Verbrennungsmotor zu der Heizeinheit 2 durchströmt werden kann. Auf diese Weise kann die Heizeinheit 2 wahlweise mit Wärmeversorgung nur vom Verbrennungsmotor her, mit Wärmeversorgung nur durch das Heizgerät 6 oder mit daraus kombinierter Wärmeversorgung betrieben werden.

Vor oder hinter dem Wärmetauscher 4 sitzt ein nicht dargestelltes Gebläse, um Luft, die sich beim Hindurchführen durch den Wärmetauscher 4 erwärmt, in das Fahrzeuginnere zu blasen.

Elektrisch wird das beschriebene System durch die fahrzeugseitig vorhandene Batterie betrieben. Die Inbetriebnahme erfolgt entweder über einen einfachen Schalter oder aber über eine programmierbare Zeitschaltuhr. Das System besitzt eine eigene Steuerung, eine Zirkulationspumpe für den Wasserkreislauf und eine Versorgungseinheit (Kraftstoff, Brennluft).

## Patentansprüche

1. Fahrzeugheizung aufweisend
(a) ein durch Verbrennung von Flüssigbrennstoff arbeitendes Heizgerät (6) mit einem Verbrennungsgas/Flüssigkeit-Wärmetauscher (24); und
(b) einen Flüssigkeit/Luft-Wärmetauscher (4) zur Lieferung erwärmter Fahrzeugbeheizungsluft, der mit dem Verbrennungsgas/Flüssigkeit-Wärmetauscher (24) in Flüssigkeitsströmungsverbindung steht,
dadurch gekennzeichnet,
daß der Flüssigkeit/Luft-Wärmetauscher (4) und das Heizgerät (6) eine kombinierte Heizeinheit (2) bilden, bei welcher der Flüssigkeit/Luft-Wärmetauscher (4) und mindestens der den Verbrennungsgas/Flüssigkeit-Wärmetauscher (24) beinhaltende Teil des Heizgeräts (6) zusammengefaßt sind.

2. Fahrzeugheizung nach Anspruch 1,
dadurch gekennzeichnet,
daß der Verbrennungsgas/Flüssigkeit-Wärmetauscher (24) einen Flüssigkeitsdurchströmungs-Ringraum (33) mit im wesentlichen schraubenlinienförmiger Führung der Flüssigkeitsströmung in dem Ringraum (33) aufweist.

3. Fahrzeugheizung nach Anspruch 1 oder 2,
dadurch gekennzeichnet,
daß die Heizeinheit (2) eine Flüssigkeits-Umwälzpumpe (42) zum Erzeugen von Flüssigkeitsstromung durch den Verbrennungsgas/Flüssigkeit-Wärmetauscher (24) und den Flüssigkeit/Luft-Wärmetauscher (4) aufweist.

4. Fahrzeugheizung nach einem der Ansprüche 1 bis 3,
dadurch gekennzeichnet,
daß die Heizeinheit (2) aus Flüssigkeit/Luft-Wärmetauscher (4) und Heizgerät (6) an den Kühlflüssigkeitskreislauf eines Antriebs-Verbrennungsmotors (48) des Fahrzeugs angeschlossen ist.

5. Fahrzeugheizung nach Anspruch 4,
dadurch gekennzeichnet,
daß der Kühlflüssigkeitskreislauf eine Bypassleitung (54) zur kurzen Verbindung des Flüssigkeitsauslasses des Flüssigkeit/Luft-Wärmetauschers (4) mit dem Flüssigkeitseinlaß des Heizgeräts (6) und ein Steuerventil (56) zum Steuern des Verhältnisses der Flüssigkeitsströmung durch die Bypassleitung (54) und durch den Verbrennungsmotor aufweist.

6. Fahrzeugheizung nach Anspruch 5,
dadurch gekennzeichnet,
daß das Steuerventil (56) ein auf die Temperatur der Flüssigkeit an einer Temperaturerfassungsstelle des Kühlflüssigkeitskreislaufs ansprechendes Ventil ist.

7. Fahrzeugheizung nach Anspruch 5 oder 6,
dadurch gekennzeichnet,
daß das Steuerventil (56) ein zeitgesteuertes Ventil ist.

8. Fahrzeugheizung nach einem der Ansprüche 1 bis 7,
dadurch gekennzeichnet,
daß der Flüssigkeit/Luft-Wärmetauscher (4) zwei in Luftdurchströmungsrichtung hintereinander angeordnete Rohrreihen (10,12) aufweist, wobei die Rohre der vorderen Rohrreihe (10) an einer ersten Seite des Wärmetauschers (4) mit den Rohren der hinteren Rohrreihe (12) in Verbindung stehen, und daß das Heizgerät (6) an der gegenüberliegenden zweiten Seite des Wärmetauschers (4) angesetzt ist.

9. Fahrzeugheizung nach einem der Ansprüche 1 bis 8,
dadurch gekennzeichnet,
daß das Heizgerät (6) einen Flansch (44) aufweist und mittels eines um den Flansch (44) gebördelten Rohrbodens (46) des Flüssigkeit/Luft-Wärmetauschers (4) mit diesem zusammengebaut ist.

10. Fahrzeugheizung nach einem der Ansprüche 4 bis 9,
dadurch gekennzeichnet,
daß die Heizeinheit (2) an derjenigen Stelle des Fahrzeugs eingebaut ist, wo herkömmlicherweise der Flüssigkeit/Luft-Wärmetauscher der Fahrzeugheizung sitzt.

11. Fahrzeugheizung nach einem der Ansprüche 4 bis 10,
dadurch gekennzeichnet,
daß zur Brennstoffversorgung der Heizeinheit (2) ein Zwischentank vorgesehen ist, der bei Betrieb des Verbrennungsmotors (48) durch dessen Kraftstoffpumpe füllbar ist.

12. Fahrzeugheizung nach Anspruch 11,
dadurch gekennzeichnet,
daß der Zwischentank höher angeordnet ist als die Heizeinheit (2).

## Claims

1. A vehicle heating system, comprising
(a) a heater (6) having a combustion gas/liquid heat exchanger (24) and operating by burning liquid fuel; and
(b) a liquid/air heat exchanger (4) in fluid flow communication with said combustion gas/liquid heat exchanger (24) to supply heated air to warm the vehicle,
characterized in that the liquid/air heat exchanger (4) and the heater (6) constitute a combined heating unit (2) in which the liquid/air heat exchanger (4) and at least the part of the heater (6) containing the combustion gas/liquid heat exchanger (24) are combined.

2. A vehicle heating system according to claim 1, characterized in that the combustion gas/liquid heat exchanger (24) comprises a liquid passage annular space (33) providing a substantially helical guidance of the liquid flow in the annular space (33).

3. A vehicle heating system according to claim 1 or 2, characterized in that the heating unit (2) comprises a liquid circulation pump (42) for producing a liquid flow through the combustion gas/liquid heat exchanger (24) and the liquid/air heat exchanger (4).

4. A vehicle heating system according to any one of claims 1 to 3, characterized in that the heating unit (2) composed of liquid/air heat exchanger (4) and heater (6) is connected to the cooling liquid circuit of an internal combustion driving engine (48) of the vehicle.

5. A vehicle heating system according to claim 4, characterized in that the cooling liquid circuit comprises a bypass line (54) for providing a short connection of the liquid outlet of the liquid/air heat exchanger (4) to the liquid inlet of the heater (6) , and a control valve (56) for controlling the ratio of the liquid flow through the bypass line (54) and through the internal combustion engine.

6. A vehicle heating system according to claim 5, characterized in that the control valve (56) is a valve responsive to the temperature of the liquid at a temperature measurement location of the cooling liquid circuit.

7. A vehicle heating system according to claim 5 or 6, characterized in that the control valve (56) is a time-controlled valve.

8. A vehicle heating system according to any one of claims 1 to 7, characterized in that the liquid/air heat exchanger (4) comprises two pipe rows (10, 12) arranged one after the other in the direction of air flow there through, the pipes of the front pipe row (10) being connected to the pipes of the rear pipe row (12) on a first side of the heat exchanger (4), and in that the heater (6) is attached to the opposite, second side of the heat exchanger (4).

9. A vehicle heating system according to any one of claims 1 to 8, characterized in that the heater (6) has a flange (44) and is assembled in unitary manner to the liquid/air heat exchanger (4) by means of an end plate (46) of the liquid/air heat exchanger (4) which is beaded about said flange (44).

10. A vehicle heating system according to any one of claims 4 to 9, characterized in that the heating unit (2) is mounted at that location of the vehicle where the liquid/air heat exchanger of the vehicle heating system is conventionally disposed.

11. A vehicle heating system according to any one of claims 4 to 10, characterized in that, for supplying the heating unit (2) with fuel, an intermediate tank is provided which, during operation of the internal combustion engine (48), is adapted to be filled by the fuel pump thereof.

12. A vehicle heating system according to claim 11, characterized in that the intermediate tank is disposed in a higher position than the heating unit (2).

## Revendications

1. Chauffage de véhicule comprenant
a) un appareil de chauffage (6) fonctionnant par combustion de combustible liquide et possédant un échangeur de chaleur gaz de combustion/liquide (24); et
b) un échangeur de chaleur liquide/air (4) pour fournir de l'air échauffé de chauffage du véhicule, qui est en liaison d'écoulement de liquide avec l'échangeur de chaleur gaz de combustion/liquide (24),
caractérisé en ce que l'échangeur de chaleur liquide/air (4) et l'appareil de chauffage (6) forment une unité de chauffage combinée (2) dans laquelle sont rassemblés l'échangeur de chaleur liquide/air (4) et au moins la partie de l'appareil de chauffage (6) contenant l'échangeur de chaleur gaz de combustion/liquide (24).

2. Chauffage de véhicule selon la revendication 1, caractérisé en ce que l'échangeur de chaleur gaz de combustion/liquide (24) comporte un espace annulaire (33) traversé par le liquide, dans lequel l'écoulement de liquide est guidé essentiellement suivant une ligne hélicoïdale.

3. Chauffage de véhicule selon la revendication 1 ou 2, caractérisé en ce que l'unité de chauffage (2) comporte une pompe de circulation de liquide (42) pour produire un écoulement de liquide à travers l'échangeur de chaleur gaz de combustion/liquide (24) et l'échangeur de chaleur liquide/air (4).

4. Chauffage de véhicule selon une des revendications 1 à 3, caractérisé en ce que l'unité de chauffage (2), constituée de l'échangeur de chaleur liquide/air (4) et de l'appareil de chauffage (6), est raccordée au circuit de liquide de refroidissement d'un moteur thermique de propulsion (48) du véhicule.

5. Chauffage de véhicule selon la revendication 4, caractérisé en ce que le circuit de liquide de refroidissement comporte un bipasse (54) pour relier par un trajet court la sortie de liquide de l'échangeur de chaleur liquide/air (4) à l'entrée de liquide de l'appareil de chauffage (6), ainsi qu'un robinet de réglage (56) pour régler le rapport du débit de liquide passant par le bipasse (54) au début de liquide passant par le moteur thermique.

6. Chauffage de véhicule selon la revendication 5, caractérisé en ce que le robinet de réglage (56) est un robinet qui réagit à la température du liquide à un point de détection de la température du circuit de liquide de refroidissement.

7. Chauffage de véhicule selon la revendication 5 ou 6, caractérisé en ce que le robinet de réglage (56) est un robinet commandé en fonction du temps.

8. Chauffage de véhicule selon une des revendications 1 à 7, caractérisé en ce que l'échangeur de chaleur liquide/air (4) comporte deux rangées de tubes (10, 12) placées l'une derrière l'autre dans la direction de traversée de l'air, dont les tubes de la rangée avant (10) communiquent sur un premier côté de l'échangeur de chaleur (4) avec les tubes de la rangée arrière (12), et que l'appareil de chauffage (6) est accolé au second côté opposé de l'échangeur de chaleur (4).

9. Chauffage de véhicule selon une des revendications 1 à 8, caractérisé en ce que l'appareil de chauffage (6) comporte une bride (44) et est assemblé à l'échangeur de chaleur liquide/air (4) par un plateau à tubes (46) serti sur la bride (44).

10. Chauffage de véhicule selon une des revendications 4 à 9, caractérisé en ce que l'unité de chauffage (2) est montée à l'endroit du véhicule où, dans une disposition classique, se trouve l'échangeur de chaleur liquide/air du chauffage du véhicule.

11. Chauffage de véhicule selon une des revendications 4 à 10, caractérisé en ce que, pour l'alimentation en combustible de l'unité de chauffage (2), on a prévu un réservoir intermédiaire pouvant être rempli par la pompe de carburant du moteur thermique (48) lors du fonctionnement de celui-ci.

12. Chauffage de véhicule selon la revendication 11, caractérisé en ce que le réservoir intermédiaire est placé plus haut que l'unité de chauffage (2).
